(19) **Europäisches Patentamt**
**European Patent Office**
**Office européen des brevets**

(11) **EP 4 597 072 A1**

(12) **EUROPEAN PATENT APPLICATION**

(43) Date of publication:
06.08.2025 Bulletin 2025/32

(21) Application number: 24154994.8

(22) Date of filing: 31.01.2024

(51) International Patent Classification (IPC):
*G01N 15/0205* (2024.01)    *G01N 15/1429* (2024.01)
*G06N 3/045* (2023.01)

(52) Cooperative Patent Classification (CPC):
**G01N 15/0205; G01N 15/075; G01N 21/65;**
**G06N 3/045;** G01N 2015/0294; G01N 2201/1296

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Rheinisch-Westfälische Technische Hochschule**
**Aachen, Abgekürzt RWTH Aachen,**
**Körperschaft Des Öffentlichen Rechts**
**52062 Aachen (DE)**
• **Université du Luxembourg**
**4365 Esch-sur-Alzette (LU)**
• **The Johns Hopkins University**
**Baltimore, MD 21218 (US)**

(72) Inventors:
• **KAVEN, Luise**
**52070 Aachen (DE)**
• **MITSOS, Alexander**
**52078 Aachen (DE)**
• **FAUST, Johannes**
**52062 Aachen (DE)**
• **KEVREKIDIS, Ioannis**
**BALTIMORE, MD, 21218 (US)**
• **KORONAKI, Eleni**
**4364 ESCH-SUR-ALZETTE (LU)**

(74) Representative: **Eisenführ Speiser**
**Patentanwälte Rechtsanwälte PartGmbB**
**Gollierstraße 4**
**80339 München (DE)**

(54) **PARTICLE CHARACTERISTIC DETERMINATION SYSTEM AND METHOD**

(57)    A system for particle characteristic determination comprising a sample providing unit, configured to provide a sample comprising a plurality of particles, an obtaining unit, configured to obtain a light spectra data comprising light spectra of the sample, a data processing unit comprising a data compression unit and a particle characteristic determination unit, wherein the data compression unit is configured to compress the light spectra data using a predetermined Nyström extension in a diffusion maps algorithm configured to provide diffusion map coordinates, wherein the particle characteristic determination unit is configured to receive the diffusion map coordinates as input and to determine one or more characteristics of the particles comprised in the sample with one or more non-linear machine learning methods by using the diffusion map coordinates in at least one of the one or more non-linear machine learning methods as input and providing the one or more particle characteristics as output.

## Description

The present invention relates to a system for particle characteristic determination and a method for particle characteristic determination. Furthermore, the present invention relates to a method for particle size determination from light spectra data as well as to a computer program for particle size determination from light spectra data.

Process analytical methods are crucial for optimizing process performance and product properties, especially in polymerization. In-line spectroscopic methods are advantageous, and, in particular, near-infrared (NIR) and Raman spectroscopy are widely applied spectroscopic methods. The role of NIR and Raman spectroscopy in the field of process analytical technology is discussed widely. Evaluation methods for concentrations from (either on-line or off-line) spectroscopic data are established and comprise regression models, such as univariate peak integration based on the Beer-Lambert law, multivariate partial least squares (PLS), or artificial neural networks (ANNs), and physically supported strategies such as multivariate curve resolution-alternating least squares (MCR-ALS) or indirect hard modelling (IHM).

Size is a crucial product feature in several processes, e.g., polymerization and crystallization. Prediction of size from spectroscopic data remains a major challenge. The fact that colloids such as polymers influence spectroscopic measurements by light scattering is well established, and experimental evidence of the correlation between Raman scattering and polymer size has been presented, even for relatively large particles. However, only a few approaches attempt to predict polymer sizes from Raman spectra. These approaches rely on relatively small sets of data points and focus on training data-driven models. The prediction accuracy of these approaches models needs improvement compared to established methods such as dynamic light scattering (DLS). Most of these methods are based on the linear methods PLS or Principal Component Analysis (PCA), which reduce the predictors to a smaller set of uncorrelated components and perform least squares regression on these components instead of on the original data.

Each spectral measurement consists of many measured intensities, resulting in large dimensionality of the input vector. However, the measured intensities are not independent. When the available data live in a low-dimensional, yet nonlinear manifold, linear methods often fail to capture the majority of the variance of the data, even with an increased number of principal components. Thus, it was the primary task of the present invention to provide systems and methods for a reliable and straightforward particle characteristics determination from light spectra, such as Raman spectra.

This primary task was solved by providing a system for particle characteristic determination comprising:

an obtaining unit, configured to obtain a light spectra data comprising light spectra of the sample,
a data processing unit comprising
a dimensionality reduction unit configured to reduce a dimensionality of the light spectra data based on a non-linear dimensionality reduction method to obtain dimension reduced spectra, and
a particle characteristic determination unit configured to receive the dimension reduced spectra and to determine one or more characteristics of the particles comprised in the sample with a non-linear machine learning method based on the dimension reduced spectra as input and providing the one or more particle characteristics as output.

This system improves particle characteristic determination, in specific determination of particle size, and/or particle concentration, and/or particle size distribution, and/or particle morphology, based on light spectroscopy data and provides a useful application of machine learning algorithms to the field of spectroscopy, in specific Raman spectroskopy.

The obtaining unit obtains light spectra from the sample. The light spectra may be Raman spectra. The obtaining unit may comprise a Raman spectrometer. The sample may be homogenous or disperse. The sample may comprise a cross-linked polymer network called "microgel". The size and/or the concentration of the polymer in the microgel is a crucial characteristic for product quality control in polymerization.

The dimensionality reduction unit reduces the dimensionality of the spectra. Since the measured intensities of the Raman spectra are not independent, the underlying parameters are embedded in a low-dimensional manifold. Accordingly, the dimensionality of the spectra can be reduced using non-linear dimensionality reduction.

It is preferred in terms of the system according to the present invention that the data compression unit is configured to reduce a dimensionality of the light spectra data based on a diffusion maps algorithm to a dimensionality of the diffusion map coordinates required to parameterize the low-dimensional embedding of the data.

A diffusion maps algorithm (DMAPs algorithm) is based upon (mathematical) diffusion processes on the data and facilitates discovering meaningful low-dimensional intrinsic geometric descriptions of data sets, even when the data is high-dimensional, nonlinear, and/or corrupted by (relatively small) noise. The algorithm has been successfully used for dimensionality reduction. It provides an effective dimensionality reduction of a full set of spectra. This reduction enables efficient interpolation and regression since much fewer (typically <10) variables, so called diffusion map coordinates (DMAP coordinates), are involved. Once the low-dimensional representation of the spectra is determined in an offline step, it is possible to translate between coordinates in the ambient (spectra) and the reduced space (DMAP coordinates). The mapping from high to low dimension is achieved with the Nyström extension, whereas for the inverse, a particular implementation of Geometric Harmonics, called DoubleDMAPs, is preferably selected. Accurate reconstruction of the data set from the selected DMAP coordinates indicates that the latter is an adequate low-dimensional parameterization.

In detail, DMAPs discover data-driven coordinates on (i.e., parameterizations of) the low-dimensional manifold. These coordinates are a few of the leading eigenvectors, $\phi_i$, of a scaled affinity matrix, which contains the Euclidean distances between all the pairs of available data points. Discovering which eigenvectors parameterize independent directions and do not span the same direction with different frequencies (harmonics) is important. To achieve this distinction, the so-called "local linear regression" algorithm is used. Each DMAP coordinate is fit as a function of the previous coordinates. To select DMAP coordinates that are independent, the "goodness of fit" of this function is used. A good fit is associated with a specific eigenvector, $\phi_k$, that is a harmonic function of the previous eigenmodes, whereas a bad fit signifies that $\phi_k$ is a new, independent direction on the data manifold.

An important ingredient of the proposed approach includes the reverse mapping from the DMAP coordinates to the variables in ambient space, which allows for the translation between the high and low-dimensional data description. To this end, Geometric Harmonics are proposed as a scheme for extending functions defined on data $X$, $f(X):X \rightarrow R$, for $x_{new} \notin X$. Here, the DoubleDMAPs algorithm, a particular implementation of Geometric Harmonics, is selected. Double-DMAPs are suitable in cases where the data are low-dimensional and can be parameterized by a few non-harmonic eigenvectors.

An offline step according to the invention preferably comprises training of the respective algorithm or model and computing the necessary common variables that enable accurate prediction. For example, the low-dimensional embedding of a representative training data set, comprising of spectra, is identified in order to compress the data optimally. The Diffusion Maps algorithm is implemented in order to find a parsimonious description of the high-dimensional dat. A criterion for selecting the appropriate embedding is how accurately the training data set can be reconstructed based on the determined diffusion map coordinates.

After the dimensionality reduction, one or more machine learning methods are provided by the system, wherein the diffusion map coordinates are used as input to the machine learning strategies aiming to provide one or more particle characteristics as output.

It is preferred in terms of the system according to the present invention that the particle characteristic determination unit determines the one or more characteristics of a particle based on a feed-forward neural network,

an extreme gradient boosting network,
an alternating diffusion maps algorithm,
a conformal y-shaped auto-encoder neural network,
a combination of two or more of these non-linear machine learning methods.

It is furthermore preferred in terms of the system according to the present invention that the particle characteristic determination unit is configured to determine common variables based either on alternating diffusion maps or a conformal autoencoder.

A particle characteristic comprises particle size and/or particle concentration and/or particle size distribution, and/or particle morphology.

Preferably, one of three alternative machine learning methods is provided: prediction of the quantity of interest directly from DMAPs, AltDMAPs and Conformal Autoencoder Neural Networks (ANN).

The first machine learning method involves regression analysis to estimate the relationship between the latent variables (DMAP coordinates) and the polymer size and/or concentration and/or particle size distribution, and/or particle morphology.

The second machine learning method, involves the implementation of AltDMAPs, in order to determine a common variable between spectra (in their reduced representation) and particle characteristic as described in (Katz, Ori, et al. "Alternating diffusion maps for multimodal data fusion." Information Fusion 45 (2019): 346-360). Subsequently, the overall computational workflow to predict the particle characteristic from a new spectrum starts by determining its low-dimensional DMAP coordinates with the Nyström extension. The DMAP coordinates are then used as input to a regression model (employing methods such as an ANN or XGBOOST) that produces as output the corresponding AltDMAP coordinate, i.e. the common variable. In turn, the predicted AltDMAP is used as input to a different regression model (ANNs or XGBOOST are possible alternatives used for this task) that predicts the corresponding size, for example the particle size of a microgel.

In the third machine learning method, a Conformal Autoencoder Neural Network is used. The DMAP coordinates are used as inputs (and also outputs) to a "Y-shaped" autoencoder, so as to disentangle the dependencies of the latent variables discovered by a traditional autoencoder architecture and impose correlations between the latent space and the desired output, i.e., the particle characteristic. Ultimately, given a new set of DMAPs, this "designer" NN can predict the corresponding particle characteristic, e.g. particle size and/or concentration and/or particle size distribution, and/or particle morphology, (and reconstruct the DMAPs themselves).

The inventors found that it is not only important to find a generic parsimonious low-dimensional parameterization of the data (for example achieved with DMAPs) but, more importantly, to find the appropriate one, i.e., the one that possesses a component that is directly correlated to the particle characteristic and is independent of other factors (i.e. other species present in the sample). This combination allows for the determination of the particle size of a sample with far improved accuracy.

With the suggested nonlinear manifold learning approach, significant dimensionality reduction, replacement of extensive data sets with a handful of latent variables and, more importantly, identification of latent variables possessing certain desired properties is achieved. For the former, Diffusion Maps (DMAPs) are employed, to first derive a parsimonious reduced description of the light spectra. Then particle size and/or concentration and/or particle size distribution, and/or particle morphology is predicted directly from the latent variables (DMAP coordinates) computed with the DMAPs algorithm. Preferably, additional steps are taken regarding the characteristics of the latent space by applying two alternative machine learning methods to discover common latent variables between the spectra and the particle sizes, concentration, particle size distribution, and/or particle morphology. In this sense, "common" describes a set of variables that correlate to the desired observed quantity. The common variable(s) between the spectra and the particle size is used as a data-driven "junction" through which the particle size and/or concentration given the spectrum of a new sample is predicted.

Preferably, the particle is a polymer, in specific a polymer of a microgel. The sample contains the particles. The sample may be homogenous or disperse. In an embodiment, cross-linked polymer networks called microgels are considered. Even though, polymers might not be considered particles, the term "particle characteristic" also refers to "microgel characteristic" and "polymer characteristic". For example, the particle characteristic may be particle size and/or concentration and/or particle size distribution, and/or particle morphology of the polymer.

Moreover preferably, an output unit that uses the one or more characteristics of the particles comprised in the sample determined by the particle characteristic determination unit is provided. The output of the output unit may be the determined particle size and/or concentration and/or particle size distribution, and/or particle morphology. The output unit may comprise an interface to connect to a client device. The output unit may comprise a display. The output unit may, for example, provide the determined particle size and/or concentration and/or particle size distribution, and/or particle morphology of a sample to a user via the client device or via the display.

Preferably, the data compression unit is configured to reduce a dimensionality of the light spectra data to a dimensionality of the diffusion map coordinates by restating the high dimensionality light spectra data in a low-dimensional coordinate system using a predetermined Nyström extension. Preferably, the number of independent variables in the low-dimensional data set it reduced below 10. Even more preferably, the number of independent variables is reduced to less than 5.

The number of DMAPs required is assessed based on how accurately the original dataset can be reconstructed by the retained latent variables. The approach is similar to selecting the dimension of the bottleneck layer of an Autoencoder, which is done by training networks with different architectures and finding the minimal one that achieves acceptable reconstruction. DMAPs is more efficient as it requires the solution of a single eigenproblem, rather than possible time-consuming training. There is a true benefit in working with as few latent variables as possible: in the Conformal Auto-encoder the number of inputs (and outputs) should be as small as possible, to make training/testing more economical. Thus, the proposed solution provides a more efficient solution that also saves resources.

Further, since in process-related applications the datasets are typically not "big" the danger of overfitting is avoided. Therefore, the invention avoids any problems related to overfitting.

Preferably, the number of independent variables in the low-dimensional data set is reduced to one of 2 to 10.

Preferably, the light spectra of the sample comprise over 11,000 wavenumbers.

Preferably, the obtaining unit comprises a Raman spectrometer. The Raman spectrometer is configured to provide Raman spectra comprising the Raman intensity measured over a global range between 100 cm-1 to 3425 cm-1 correlating to 11,084 wave-lengths per spectrum. The higher the wavelength resolution of the light data provided, the better the particle characteristic determination accuracy.

Preferably, after the achieved data compression. i.e. dimensionality reduction, it is possible to predict the particle characteristics with the particle characteristic determination unit directly from the low-dimensional description, or, preferably, to resort to either of the two methods that discover common variables between the spectra and the particle characteristics: either AltDMAPs (and the assorted ANNs or tree-based methods such as XGBOOST) or a conformal auto-encoder neural network.

The particle characteristic, for example the particle size of a sample, may be predicted directly from the DMAP coordinates by the particle characteristic determination unit. The direct prediction based on DMAP coordinates is achieved preferably with one of two different regression methods: (a) neural network (NN) and (b) extreme gradient boosting network (XGBOOST), using the DMAP coordinates as input and the particle characteristic as output.

This direct approach preforms well when the latent variables derived by DMAPs clearly possess a one-to-one dependence on the desired observable, for example the particle characteristic, but this is often not the case.

Alternating Diffusion Maps (AltDMAPs) is a method based on DMAPs, designed to parameterize the common variable between independent sets of ob-

servations, $\{S_i^{(1)}, S_i^{(2)}\}$.

A popular choice is the Gaussian kernel

$$w(i,j) = \exp\left[-\left(\frac{\|x_i - x_j\|}{\epsilon}\right)^2\right]$$

where $\varepsilon$ is a hyper-parameter that quantifies the kernel's bandwidth. To recover a parameterization insensitive to the sampling density, the normalization

$$\widetilde{W} = P^{-1}WP^{-1}$$

Is performed, where $P_{ii} = \sum_{j=1}^{N} W_{ij}$ and $W_{ij}$ the elements of the matrix W. A second normalization applied on $\widetilde{W}$,

$$K = D^{-1}\widetilde{W}$$

gives a $N \times N$ Markov matrix K; here D is a diagonal matrix, collecting the row sums of the matrix $\widetilde{W}$ eigenvectors $\phi_i$.

Building on the DMAPs algorithm, the AltDMAPs algorithm defines two weighted kernel matrices, as defined in above equation: one that is based on the measurements from $s^{(1)}$ and the other, based on the measurements from $s^{(2)}$, and constructs the alternating-diffusion operator as the product of the two normalized weight matrices:

$$K^{alt} = K^{(1)}K^{(2)}$$

The diffusion process defined by this operator is equivalent to one that would have been created from measurements of only the common variable. This finding can be further explained in terms of alternating propagation steps using $K^{(1)}$ followed by $K^{(2)}$. Each propagation step can be thought of as a Markov chain that transitions to similar samples, as prescribed by the respective similarity matrix, first in the first sample set, followed by the second.

Another alternative workflow to predict particle characteristics with the particle characteristic determination unit from light spectra involves an ensemble of concurrently trained neural networks (NN), called Y-shaped Conformal Autoencoders. These Y-shaped Conformal Autoencoders are preferably used to predict particle characteristics based on DMAP coordinates. At the core of the scheme lies a regular autoencoder, i.e., a NN where the inputs and outputs are the same, with the addition of an extra "side" NN component. More details of the implementation are described below.

This workflow is considered particularly preferred, since the sample was not pre-treated, so its spectrum contains information about all its ingredients (e.g. remaining monomer, surfactant etc.); therefore, it is not a clear "signal" of the particle characteristic , for example particle size. Preferably, a "numerical filtering" technique is introduced that can (i) derive an initially reduced description of the data (through DMAPS), without consideration about the quantity of interest, for example particle characteristic and (ii) identify a single independent direction on the reduced space, whose function the single desired quantity of interest (the particle characteristic) is. Step (ii) can be thought of as designing latent coordinates that are orthogonal to the irrelevant ones, and correlate only with the particle characteristic. This is an important deviation from the state of the art improves the accuracy the proposed system because it disentangles (or filters out) the important information from other, irrelevant, information content of the spectrum.

Preferably, three steps are proposed, designed to yield very fast (practically instantaneous) predictions, without further tuning of the model parameters, in an automated manner:

Step 1: Compute the DMAP coordinates of a new spectrum using the Nyström extension.

Step 2: The common variable (AltDMAPs) is predicted from the DMAP coordinates of the new spectrum:

$$AltDMAP_i = f_{AltD}(DMAPs_i)$$

i here is the i-th new spectrum. The function $f_{AltD}$ can be approximated by a fully connected NN, Double-DMAPS, or XGBOOST, which are trained in the offline step with appropriate training data.

Step 3: The particle characteristic, $P_c$ is predicted as a function of the AltDMAP coefficients as:

$$P_c = f_c(AltDMAP_i)$$

the function $f_c$ can be approximated by a feed-forward NN or XGBOOST trained with AltDMAPs as input and particle characteristic as output.

The benefit of identifying the common variable between the particle characteristic and the light spectra with the AltDMAPs algorithm in the particle characteristic determination unit, is that the variable by design correlates to the desired characteristic. In this preferred implementation of AltDMAPs, the light spectra and the particle characteristic measurements are considered as the two independent sensor measurements ($s^{(1)}$ and $s^{(2)}$), respectively, and the outcome of this algorithm represents the common variable between the two modalities, i.e., the particle characteristic.

An alternative to the AltDMAP algorithm is the presented conformal auto-encoder neural network, wherein the conformal auto-encoder neural network comprises of an ensemble of concurrently trained neural networks, that include: an encoder neural network, a decoder neural network, a particle characteristic estimator neural network.

As already mentioned, a preferred workflow to predict particle characteristics from light spectra involves an ensemble of concurrently trained NNs, called Y-shaped Conformal Autoencoders. These Y-shaped Conformal Autoencoders are preferably used to predict particle characteristics based on DMAP coordinates. At the core of the method lies a regular autoencoder, i.e., a NN where the inputs and outputs are the same, with the addition of an extra "side" NN component.

Overall, the Y-shaped scheme can be broken down into three connected subnetworks:

Encoder, NN1, which maps the DMAP coordinates, $\phi_i$, to the autoencoder latent variables, $v_i$:

$$(\phi_1, \phi_2, \phi_3, \phi_4, \phi_5) \rightarrow (v_1, v_2, v_3, v_4, v_5)$$

Decoder, NN2, which can be thought of as the inverse transformation from the latent space of the autoencoder ($v_i$) back to the DMAP coordinates $\phi_i$:

$$(v_1, v_2, v_3, v_4, v_5) \rightarrow (\hat{\phi}_1, \hat{\phi}_2, \hat{\phi}_3, \hat{\phi}_4, \hat{\phi}_5)$$

Particle characteristic estimator, NN3, which maps the right number of autoencoder latent variables, for example one of them, $v_1$, to the observed output data, here the particle characteristic (PC):

$$(v_1) \rightarrow PC$$

The key feature is the loss function, consisting of several parts. The first part is the successful reconstruction of the input original parameters (the autoencoder part). Next comes the ability of NN3, whose input is the single latent variable, here $v_1$ is chosen, to reproduce the observed output, i.e., the particle characteristic; this forces $v_1$ to correlate to the experimentally defined value of the particle characteristic.

To concurrently train the different NNs, an additional component to the loss function becomes necessary, which results from further imposing an orthogonality constraint on the Conformal Autoencoder's latent coordinates:

$$\langle dv_i, dv_j \rangle = 0, \forall i \neq j$$

where $dv_i$ indicates the vector of partial derivatives of the latent coordinate $v_i$ with respect to of the input parameters $\phi_i$ and $\langle \cdot, \cdot \rangle$ indicates the inner product. This constraint is imposed using the automatic differentiation capabilities of the relevant code libraries and aims to disentangle the combination of features that matters to the output from those combinations of features that do not affect it, making the architecture a "Conformal Autoencoder".

Preferably, the ensemble of concurrently trained neural networks is trained to: (i) reconstruct the input (i.e. the DMAP coordinates) that represent the spectra, through an autoencoder and at the same time, (ii) learn a function that correlates one of the latent variables of the autoencoder to the particle characteristic.

In case particle size and particle concentration is to be determined, at first correlations between size and concentration need to be explored, in order to establish whether one is a function of the other. If the (size, concentration) dataset is one-dimensional then the concentration can be determined as a function of a single latent variable. If this dataset is two-dimensional then two neurons in the conformal autoencoder are needed to learn two functions (one for particle size and one for concentration) in this latent space. This concept applies to all the particle characteristics.

Preferably, the system further comprises a sample providing unit, configured to provide a sample comprising a plurality of particles.

In a second aspect, the invention relates to a method for particle characteristic determination, comprising the following steps:

providing a sample comprising a plurality of particles,
obtaining light spectra data comprising light spectra of the sample,
compressing the light spectra data by using a predetermined Nyström extension that provides diffusion map coordinates,
determining one or more characteristics of the particles comprised in the sample with one or more non-linear machine learning methods by using the diffusion map coordinates in at least one of the one or more non-linear machine learning methods as input.

The invention provides a method able to determine particle characteristics with an improved accuracy in view of conventional methods in the application field of spectroscopy.

Apart from the increase in accuracy, the determination process is faster and provides the possibility of determining several particle characteristics in parallel.

It is preferred in terms of the method according to the present invention that the particle is a polymer, in specific a polymer of a microgel.

Preferably, the step of reducing the dimensionality of the light spectra data by using a diffusion maps algorithm that provides diffusion map coordinates comprises the step of reducing a dimensionality of the light spectra data to a dimensionality of the diffusion map coordinates by restating the high dimensionality light Spectra data in a low-dimensional coordinate system using a predetermined Nyström extension.

Preferably, the number of independent variables in the low-dimensional data set it reduced below 10.

Moreover preferably, the number of variables is reduced to one of 2 to 10.

Also preferably, the light spectra of the sample comprises over 11,000 wavenumbers.

Preferably, the one or more non-linear machine learning methods are one of the following:

a feed-forward neural network,
an extreme gradient boosting network,
an alternating diffusion maps algorithm,
a conformal auto-encoder neural network
a combination of two or more of these non-linear machine learning methods.

Preferably, the step of determining the characteristics of the particles comprised in the sample with the one or more non-linear machine learning methods by using the diffusion map coordinates in at least one of the one or more non-linear machine learning methods comprises the steps of:

determining common variables, in specific using alternating diffusion maps, by entering the diffusion map coordinates into a first non-linear machine learning method,
determining particle characteristics, in specific one particle characteristic out of one common variable, by entering the common variables into a second non-linear machine learning method.

Another aspect of the present invention relates to a computer program able to perform the steps of a method according to the invention.

The invention provides a computer program able to determine particle characteristics with an improved accuracy in view of conventional methods in the application field of spectroscopy.

Apart from the increase in accuracy, the determination process is faster and provides the possibility of determining several particle characteristics in parallel.

Another aspect of the present invention relates to a method for training the ensemble of concurrently trained neural networks, wherein the ensemble of concurrently trained neural networks is trained by using a training data set.

Features of preferred embodiments of the invention are defined, in particular, in the dependent claims, while further advantageous features, embodiments and implementations are apparent to the skilled person from the above explanation.

Drawings

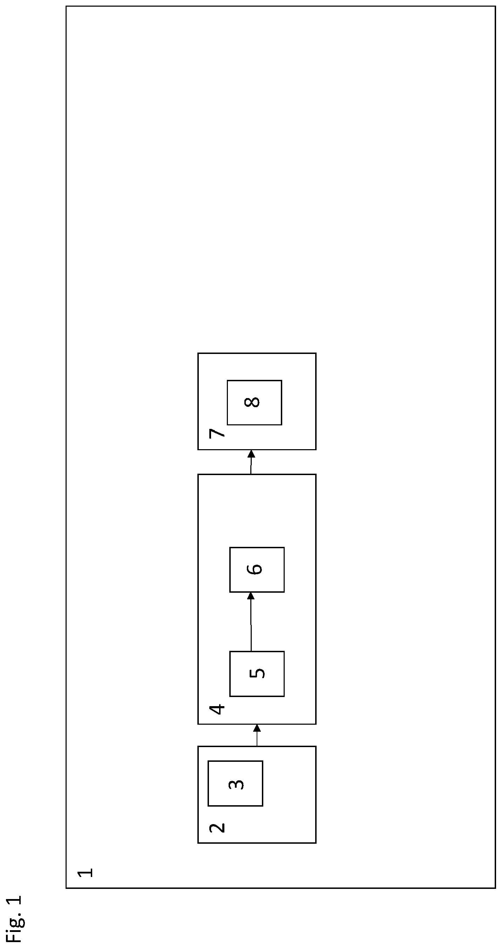

Fig. 1 shows a schematic representation of a system according to the invention.

The invention relates to a system 1 for determining particle characteristics. The system 1 comprises an obtaining unit 2 for obtaining spectra from a sample 3. The obtaining unit may comprise a Raman spectrometer and may obtain Raman spectra of the sample 3. The sample may be an homogenous or disperse sample comprising particles. The sample may for example be a polymer. For example, the sample may comprise a cross-linked polymer network called microgel. Polymer size constitutes a crucial characteristic for product quality control in polymerization. The output of the obtaining unit may be the Raman spectra of the sample.

The system further comprises a data processing unit 4. The input of the processing unit may the output of the obtaining unit. For example, the Raman spectra of the sample. The processing unit comprises a dimensionality reduction unit 5. The dimensionality reduction unit 5 may be configured to reduce a dimensionality of the light spectra data based on a diffusion maps algorithm to obtain diffusion map coordinates.

Diffusion Maps is a dimensionality reduction method that captures the intrinsic geometry and structure of high-dimensional data. It is based on the diffusion process, modeling how information spreads across the data points. Diffusion maps is a dimensionality reduction algorithm which computes a family of embeddings of a data set into Euclidean space (often low-dimensional) whose coordinates can be computed from the eigenvectors and eigenvalues of a diffusion operator on the data. The Euclidean distance between points in the embedded space is equal to the "diffusion distance" between probability distributions centered at those points. Different from linear dimensionality reduction methods such as principal component analysis (PCA), diffusion maps are part of the family of nonlinear dimensionality reduction methods which focus on discovering the underlying manifold that the data has been sampled from. By integrating local similarities at different scales, diffusion maps give a global description of the data-set. A diffusion maps algorithm allows to discover meaningful low-dimensional intrinsic geometric descriptions of data sets, even when the data is high-dimensional, nonlinear, and/or corrupted by (relatively small) noise. In particular, Diffusion maps allow to determine data-driven coordinates on the low-dimensional manifold, i.e. parametrization of the low dimensional manifold.

Utilizing Diffusion Maps has the advantage that the diffusion map algorithm is robust to noise perturbation and computationally inexpensive.

The dimensionality reduction unit 5 may further be configured to reduce a dimensionality of the light spectra data to a dimensionality of the diffusion map coordinates by restating the high dimensionality light spectra data in a low-dimensional coordinate system using a predetermined Nyström extension. The Nyström extension is a technique used to approximate the eigenfunctions and eigenvalues of a large matrix by computing only a subset of them. In the context of Diffusion Maps, the Nyström extension can be applied to efficiently compute an approximation of the diffusion maps embedding for large datasets.

The dimensionality reduction unit 5 may be configured to perform the following steps in accordance with the Nyström extension for Diffusion Maps. The dimensionality reduction unit 4 randomly selects a subset of data points from the original dataset, i.e. the Raman spectra obtained by the obtaining unit 2. This subset is often referred to as the "landmark" or "anchor" points. The dimensionality reduction unit 4 may further be configured to compute the Affinity Matrix for the Subset. The dimensionality reduction unit 4 may calculate the pairwise affinities or similarities between the landmark points by applying a kernel function to measure the similarity between each pair of landmark points. The dimensionality reduction unit 5 may compute the Affinity Matrix for the entire dataset. In particular, the dimensionality reduction unit 4 may use the selected subset and the kernel function to compute the affinity matrix for the entire dataset. The dimensionality reduction unit 4 may calculate the similarities between all data points and the selected landmark points. The dimensionality reduction unit 5 may perform eigenvalue decomposition on the affinity matrix computed for the subset of landmark points. The output of this process is a set of eigenvalues and corresponding eigenvectors. The dimensionality reduction unit 4 may approximate the eigenfunctions for the entire dataset based on the eigenvectors obtained from the subset. These eigenfunctions capture the diffusion process across the data points. The dimensionality reduction unit 5 may compute the Diffusion Maps embedding for the entire dataset based on the approximated eigenfunctions. These eigenvectors and eigenfuctions parametrize the reduced space, i.e. the DMAP coordinates. The output of the dimensionality reduction unit are DMAP coordinates that parameterize a low-dimentional embedding of the spectra.

The above described Nyström extension allows for a significant reduction in computational complexity compared to manipulating directly the entire dataset. By leveraging a reduced description of the original data points, the system 1 provides a scalable approach for large datasets while still capturing the essential structure embedded in the diffusion process.

The processing unit 2 further comprises a particle characteristic determination unit 6. The input to the particle characterization unit may be the spectrum in reduced space. The particle characteristic determination unit may be configured to receive the diffusion map coordinates of the spectra as input. The particle characteristic determination unit 6 determines the particle size based on the spectra in the representation of the diffusion map coordinates received from the dimensionality reduction unit 5. The particle characteristic determination unit 6 is configured to determine the particle size based on one of three alternative machine learning algorithms.

The particle characteristic determination unit 6 may be configured to determine the particle characteristic by using regression analysis. Regression analysis estimates the relationship between the latent variables DMAP coordinates. The particle characteristic unit 6 may use a neural network or extreme Gradient Boosting. The particle characteristic determination unit 6 uses the diffusion map coordinates of the spectra as input and provides the particle characteristic for example the particle size as output.

The particle characteristic determination unit may be configured to determine the particle characteristic based on an alternating diffusion maps workflow. The particle characteristic determination unit 6 may

(i) Predict the common variable (AltDMAP) that corresponds to the DMAP coordinates of a new spectrum (these are found by implementing the Nyström extension).

(ii) Predict the Particle characteristic that corresponds to the common variable previously determined in (i).

The particle characterization determination unit 6 may be configured to determine the particle characteristic based on y-shape auto-encoders. The particle characterization determination unit 6 may be configured with three neural networks forming the y-shaped auto encoder. An autoencoder learns two functions: an encoding function that transforms the input data, and a decoding function that recreates the input data from the encoded representation. The autoencoder learns an efficient representation (encoding) for a set of data, typically for dimensionality reduction. An autoencoder has two main parts or two neural networks, wherein the output of the first neural network is the input of the second neural network: an encoder (first network) that maps the message to a code, and a decoder (second neural network) that reconstructs the message from the code. An optimal autoencoder would perform as close to perfect reconstruction as possible, with "close to perfect" defined by the loss function *d*.

The input of the y-shaped autoencoder are the diffusion map coordinates of the spectra.

The y-shaped autoencoder comprises a third neural network that has as input, one of the latent variables of the autoencoder and as output the particle characteristic. This enforces specific qualities to the latent variable that allows accurate prediction of the desired particle characteristic.

The particle characteristic may be a particle size and/or concentration and/or particle size distribution, and/or particle morphology.

The system may further comprise an output unit 7. The output unit 7 may comprise a output interface 8. The output interface may be a display or a network connection. The output interface may provide the result. For example, the output interface may display the particle characteristic, for example the size and/or the concentration and/or particle size distribution, and/or particle morphology.

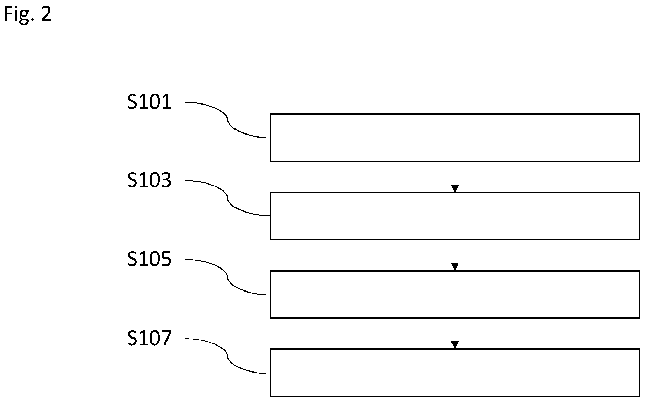

Fig. 2 shows schematic representation of a method according to the invention.

The method for particle determination shown in fig. 2 comprises the steps of providing S101 a sample comprising a plurality of particles, obtaining S103 light spectra data comprising light spectra of the sample, compressing S105 the light spectra data by using a predetermined Nyström extension in a diffusion maps algorithm that provides diffusion map coordinates, determining S107 one or more characteristics of the particles comprised in the sample with one or more non-linear machine learning methods by using the diffusion map coordinates in at least one of the one or more non-linear machine learning methods as input.

The light spectra data in step S103 may be obtained for example by Raman spectroscopy.

The particle characteristics in step 107 may be determined using for example, neural networks, Alt-DMAPs and/or autoencoders.

## Claims

1. A system (1) for particle characteristic determination comprising:

   an obtaining unit (2), configured to obtain a light spectra data comprising light spectra of a sample (3),
   a data processing unit (4) comprising
   a dimensionality reduction unit (5) configured to reduce a dimensionality of the light spectra data based on a non-linear dimensionality reduction method to obtain dimension reduced spectra, and
   a particle characteristic determination unit (6) configured to receive the dimension reduced spectra and to determine one or more characteristics of the particles comprised in the sample (3) with a non-linear machine learning method based on the dimension reduced spectra as input and providing the one or more particle characteristics as output.

2. The system (1) according to claim 1, wherein the dimensionality reduction unit (5) is configured to reduce a dimensionality of the light spectra data based on a diffusion maps algorithm to a dimensionality of the diffusion map coordinates by restating the high dimensionality light spectra data in a low-dimensional coordinate system using a predetermined Nyström extension.

3. The system (1) according to any of the preceding claims, wherein the particle characteristic determination unit (6) determines the one or more characteristics of a particle based on a feed-forward neural network,

   an extreme gradient boosting network,
   an alternating diffusion maps algorithm,
   a conformal y-shaped auto-encoder neural network,
   a combination of two or more of these non-linear machine learning methods.

4. The system (1) according to any of the preceding claims, wherein the particle characteristic determination unit (6) is configured to determine common variables based on alternating diffusion maps, by entering the diffusion map coordinates into a first non-linear machine learning method, and to determine a particle characteristic out of one common variable and by entering the common variables into a second non-linear machine learning method.

5. The system (1) according to claim 4, wherein the first non-linear machine learning method is one of the following list:

   a neural network and/or
   a double diffusion maps algorithm and/or
   an extreme gradient boosting network and/or
   a combination of two or more of these non-linear machine learning methods.

6. The system (1) according to any of claims 4 or 5, wherein the second non-linear machine learning method is one of the following list:

   a feed-forward neural network and/or
   an extreme gradient boosting network and/or
   a combination of two or more of these non-linear machine learning methods.

7. The system (1) according to claim 6, wherein the second non-linear machine learning method is trained on getting one or more alternating diffusion maps as input and providing one or more particle characteristics as output, in specific providing one particle characteristic per alternating diffusion map.

8. The system (1) according to any of claims 1 to 5, wherein
   the one or more non-linear machine learning methods comprise a conformal auto-encoder neural network, wherein the conformal auto-encoder neural network comprises of an ensemble of concurrently trained neural networks, comprising:

   an encoder neural network,
   a decoder neural network,
   a particle characteristic estimator neural network.

9. The system (1) according to claim 8, wherein the ensemble of concurrently trained neural networks is trained on:

 reconstructing data, that is encoded by the encoder neural network into encoded data, by decoding the encoded data with the decoder neural network,
 reproducing values as observed output, in specific the particle characteristic, by the particle characteristic estimator neural network, wherein the particle characteristic estimator neural network is trained on getting encoded data encoded by the encoder as input and providing a value, in specific the particle characteristic, as observed output.

10. The system (1) according to claim 9, wherein the particle characteristic determination unit (6) is configured to

 provide the diffusion map coordinates to the conformal auto-encoder neural network,
 determine auto-encoder latent variables based on the diffusion map coordinates with the encoder,
 reconstruct the diffusion map coordinates based on the auto-encoder latent variables with the decoder,
 determine the particle characteristic based on the auto-encoder latent variables with the particle characteristic estimator neural network, in specific determining one particle characteristic per auto-encoder latent variable.

11. A method for particle characteristic determination, comprising the following steps:

 providing (S101) a sample comprising a plurality of particles,
 obtaining (S103) light spectra data comprising light spectra of the sample,
 compressing (S105) the light spectra data by using a predetermined Nyström extension in a diffusion maps algorithm that provides diffusion map coordinates,
 determining (S107) one or more characteristics of the particles comprised in the sample with one or more non-linear machine learning methods by using the diffusion map coordinates in at least one of the one or more non-linear machine learning methods as input.

12. The method according to claim 11, wherein the step of compressing (S105) the light spectra data by using a predetermined Nyström extension in a diffusion maps algorithm that provides diffusion map coordinates comprises the step of reducing a dimensionality of the light spectra data to a dimensionality of the diffusion map coordinates by restating the high dimensionality light Spectra data in a low-dimensional coordinate system using a predetermined Nyström extension.

13. The method according to claims 11 and 12, wherein the one or more non-linear machine learning methods are one of the following:

 a feed-forward neural network,
 an extreme gradient boosting network,
 an alternating diffusion maps algorithm,
 a conformal auto-encoder neural network
 a combination of two or more of these non-linear machine learning methods, and/or wherein the step of determining (S107) one or more characteristics of the particles comprised in the sample with the one or more non-linear machine learning methods by using the diffusion map coordinates in at least one of the one or more non-linear machine learning methods comprises the steps of:

  determining common variables, in specific using alternating diffusion maps, by entering the diffusion map coordinates into a first non-linear machine learning method,
  determining particle characteristics, in specific one particle characteristic out of one common variable, by entering the common variables into a second non-linear machine learning method.

14. A computer program comprising instructions when executed by a processor causing a processor to perform the steps of the method according to one of claims 11 to 13.

Fig. 1

Fig. 2

Europäisches
Patentamt

European
Patent Office

Office européen
des brevets

# EUROPEAN SEARCH REPORT

**Application Number**

EP 24 15 4994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/053592 A1 (UNIV CALIFORNIA [US]) 30 March 2017 (2017-03-30) | 1,3,4, 7-11,14 | INV. G01N15/0205 |
| Y | * paragraphs [0037], [0083], [0088], [0149], [0172] - [0174], [0176], [0199] * | 2,5,6, 12,13 | G01N15/1429 G06N3/045 |
| | ----- | | |
| X | WO 2022/260539 A1 (AUCKLAND UNISERVICES LTD [NZ]) 15 December 2022 (2022-12-15) | 1,3,4, 7-11,14 | |
| Y | * paragraphs [0001], [0103], [0104], [0107], [0226] * | 2,5,6, 12,13 | |
| | ----- | | |
| A | EP 4 068 152 A1 (SARTORIUS BIOANALYTICAL INSTR INC [US]) 5 October 2022 (2022-10-05) * paragraphs [0052], [0073]; figures 5-9 * | 2,3,5,6, 12,13 | |
| | ----- | | |
| Y | BUCHMAN S M ET AL: "High-dimensional density estimation via SCA: An example in the modelling of hurricane tracks", STATISTICAL METHODOLOGY, ELSEVIER, AMSTERDAM, NL, vol. 8, no. 1, 1 January 2011 (2011-01-01) , pages 18-30, XP027535586, ISSN: 1572-3127 [retrieved on 2009-07-17] | 2,3,5,6, 12,13 | **TECHNICAL FIELDS SEARCHED (IPC)** G01N G06N |
| A | * page 21, line 24 - page 22, line 16 * | 11,14 | |
| | ----- | | |
| Y | MOHAMED-ALI BELABBAS ET AL: "On landmark selection and sampling in high-dimensional data analysis", ARXIV.ORG, CORNELL UNIVERSITY LIBRARY, 201 OLIN LIBRARY CORNELL UNIVERSITY ITHACA, NY 14853, 25 June 2009 (2009-06-25), XP080331052, DOI: 10.1098/RSTA.2009.0161 | 2,3,5,6, 12,13 | |
| A | * item 3. * | 11,14 | |
| | ----- | | |
| | -/-- | | |

The present search report has been drawn up for all claims

| Place of search | Date of completion of the search | Examiner |
|---|---|---|
| The Hague | 12 July 2024 | Geromel Prette, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

**Application Number**

EP 24 15 4994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FRANK TOMPKINS ET AL: "Image analysis with regularized Laplacian eigenmaps", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 September 2010 (2010-09-26), pages 1913-1916, XP031813359, ISBN: 978-1-4244-7992-4 | 2,12 | |
| A | * page 1914 right column last paragrap * ----- | 11,14 | |
| Y | MISHNE GAL ET AL: "Diffusion nets", APPLIED AND COMPUTATIONAL HARMONIC ANALYSIS, ACADEMIC PRESS INC, US, vol. 47, no. 2, 1 September 2019 (2019-09-01), pages 259-285, XP085735280, ISSN: 1063-5203, DOI: 10.1016/J.ACHA.2017.08.007 [retrieved on 2017-08-31] | 2,3,5,6, 12,13 | |
| A | * item 2.2 "The Nyström extension method is a popular method for general OOSE." * ----- | 11,14 | TECHNICAL FIELDS SEARCHED (IPC) |
| A | KATZ ORI ET AL: "Alternating diffusion maps for multimodal data fusion", INFORMATION FUSION, ELSEVIER, US, vol. 45, 6 January 2018 (2018-01-06), pages 346-360, XP085419753, ISSN: 1566-2535, DOI: 10.1016/J.INFFUS.2018.01.007 * the whole document * ----- | 3,4,7 | |

-/--

The present search report has been drawn up for all claims

| Place of search | Date of completion of the search | Examiner |
|---|---|---|
| The Hague | 12 July 2024 | Geromel Prette, A |

EPO FORM 1503 03.82 (P04C01)

page 2 of 3

## EUROPEAN SEARCH REPORT

**Application Number**

EP 24 15 4994

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| A | ORI KATZ ET AL: "Diffusion-based nonlinear filtering for multimodal data fusion with application to sleep stage assessment", ARXIV.ORG, CORNELL UNIVERSITY LIBRARY, 201 OLIN LIBRARY CORNELL UNIVERSITY ITHACA, NY 14853, 13 January 2017 (2017-01-13), XP081423308, * the whole document * | 3,4,7 | |
| A | WO 2023/144395 A1 (DEEPMIND TECH LTD [GB]) 3 August 2023 (2023-08-03) * paragraph [0079] * | 8-10 | |
| A | CN 114 337 849 A (UNIV SHANGHAI TRAFFIC) 12 April 2022 (2022-04-12) * paragraphs [0013], [0044], [0149], [0152] * | 8-10 | |
| | | | TECHNICAL FIELDS SEARCHED (IPC) |

The present search report has been drawn up for all claims

| Place of search | Date of completion of the search | Examiner |
|---|---|---|
| The Hague | 12 July 2024 | Geromel Prette, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**EP 4 597 072 A1**

## ANNEX TO THE EUROPEAN SEARCH REPORT
## ON EUROPEAN PATENT APPLICATION NO.

EP 24 15 4994

12-07-2024

| Patent document cited in search report | | Publication date | Patent family member(s) | | Publication date |
|---|---|---|---|---|---|
| WO 2017053592 | A1 | 30-03-2017 | US 2018286038 A1 | | 04-10-2018 |
| | | | WO 2017053592 A1 | | 30-03-2017 |
| WO 2022260539 | A1 | 15-12-2022 | NONE | | |
| EP 4068152 | A1 | 05-10-2022 | NONE | | |
| WO 2023144395 | A1 | 03-08-2023 | NONE | | |
| CN 114337849 | A | 12-04-2022 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **KATZ, ORI et al.** Alternating diffusion maps for multimodal data fusion.. *Information Fusion*, 2019, vol. 45, 346-360